# EUROPÄISCHE PATENTSCHRIFT

(11) **EP 1 564 534 B1**
(45) Veröffentlichungstag und Bekanntmachung des Hinweises auf die Patenterteilung: **20.12.2006**
(21) Anmeldenummer: 04100538.0
(22) Anmeldetag: 12.02.2004
(51) Int. Cl.: G01G 21/00

(54) **Wägezellenmodul**
Load cell module
Module à cellule de charge

(43) Veröffentlichungstag der Anmeldung: 17.08.2005
(73) Patentinhaber: Mettler-Toledo AG, 8606 Greifensee (CH)
(72) Erfinder: Köppel, Thomas, 8618 Oetwil am See (CH); Schilling, Peter, 8854 Siebnen (CH); Schneider, Ferdinand, 8406 Winterthur (CH); Burkhard, Hans Rudolf, 8492 Wila (CH)

(56) Entgegenhaltungen:
- EP-A- 1 195 588
- DE-U1- 29 514 793
- US-B1- 6 472 618

## Beschreibung

Die Erfindung betrifft eine Wägezelle, beziehungsweise ein Wägezellenmodul mit einer Vorrichtung zur Kraftübertragung, die über eine Parallelführung mit einem vertikal beweglichen und mit einem feststehenden Parallelogrammschenkel verfügt.

Eine Wägezelle als Kernstück einer Waage bestimmt im wesentlichen durch die in ihr vorhandene Vorrichtung zur Kraftübertragung aufgrund deren Auslegung für eine Maximallast und deren erreichbarer Genauigkeit den Einsatzbereich einer Waage.

Auf dem Markt erhältliche Waagen sind häufig durch so genannte Waagenfamilien, oder auch Waagenreihen, klassiert, welche sich durch ein ähnliches Erscheinungsbild und durch eine ähnliche Kennzeichnung auszeichnen. Häufig ist eine Waagenfamilie das Ergebnis eines Entwicklungsprojekts oder mehrerer mit einander verbundener Entwicklungsprojekte.

Bei Waagen nach dem Stand der Technik besteht das Problem, dass die innerhalb einer Waagenfamilie für verschieden hohe Maximallasten und unterschiedliche Auflösungen ausgelegten Wägezellen sich hinsichtlich ihrer Bauform und Baugruppen stark voneinander unterscheiden können. Auf diese Weise besteht eine hohe Variantenvielfalt an Baugruppen, was zu hohen Produktions- und Lagerkosten führt.

Insbesondre unterscheiden sich die verschiedenen Typen einer Waagenfamilie häufig aber auch hinsichtlich der Grösse und Ankopplung ihrer Waagschale an die Wägezelle. Für eine höherlastige Waage ist es bekanntermassen nutzbringend, die in der Regel notwendige grössere Waagschale beziehungsweise einen gegebenenfalls vorhandenen Waagschalenträger über mehrere, meist vier Punkte an den Lastteil der Wägezelle, das heisst den vertikal auslenkbaren Parallelogrammschenkel der Vorrichtung zur Kraftübertragung anzukoppeln, um Eckenlasteinflüsse zu vermeiden. Für niederlastige Waagen hingegen ist es bevorzugt, die meist kleine Waagschale in einer so genannten Einpunktankopplung beispielsweise über einen Konus als Halterung mit dem Lastteil zu verbinden.

Im Stand der Technik sind Waagen bekannt, für welche einzelne Komponenten bereits derart ausgeformt sind, dass sie mit relativ wenig Aufwand an verschiedene Maximallasten angepasst werden können.

Die EP 0 573 806 A1 zum Beispiel offenbart eine Waage, deren Messzelle form- und kraftschlüssig mit einem U-förmigen Zwischenhalter verbunden ist. Die Messzelle ist zwischen den U-Schenkeln des Zwischenhalters angeordnet und an dessen Basis befestigt. Die beiden Kontaktflächen am Zwischenhalter, beziehungsweise an der Messzelle, sind dabei in sehr engen Toleranzen gefertigt, so dass bei der gegenseitigen Verschraubung keine Kräfte in die Messzelle eingeleitet werden. Dadurch kann die Messzelle zusammen mit dem Zwischenhalter vor dem Einbau in ein Waagengehäuse abgeglichen werden und dann als Einheit in ein Gehäuse eingebaut werden. Der U-förmige Zwischenhalter ist zur Aufnahme von Messzellen mit jeweils unterschiedlicher Breite ausgelegt.

In der DE 295 14 793 U1 wird ein Überlastschutzsystem für eine Präzisionswaage beschrieben, welches eine Hilfsparallelführung aufweist, deren oberer und unterer Lenker an ihren waagschalenseitigen Enden durch mindestens ein Verbindungsglied und an ihren der Waagschale abgewandten Enden durch den Lastaufnehmer parallelogrammartig verbunden sind. Das Überlastschutzsystem verfügt über mindestens eine die Waagschale und den Lastaufnehmer innerhalb des Lastbereichs starr koppelnde vorgespannte Feder, wobei diese zwischen dem oberen Lenker und einer mit dem Lastaufnehmer fest verbundenen Auflageplatte eingesetzt ist. Das Verbindungsglied ist dabei mit Spiel durch die Auflageplatte hindurch geführt. Auf diese Weise kann das Überlastschutzsystem vorwiegend seitlich des vorderen Endes der Messzelle angeordnet sein und nimmt daher wenig Raum ein.

An den die Biegegelenke enthaltenden und durch zwei Führungsbolzen verbundenen Lenkerplatten oder an der Auflageplatte der Hilfsparallelführung der Überlastschutzvorrichtung kann zusätzlich eine Aufnahme für ein Kalibriergewicht befestigt oder integriert werden. Damit lässt sich das Überlastschutzsystem ausserhalb der Waage vormontieren und auf deren Höchstlast abstimmen. Die Verbindung dieser Baugruppe mit der Messzelle erfolgt durch wenige Schrauben. Die Anpassung an verschiedene Lastbereiche kann durch die Verwendung einer Feder mit einer anderen Federkonstante erfolgen.

Nachteilig bei den im Stand der Technik offenbarten Vorrichtungen ist jedoch, dass zwar für jeweils einzelne Komponenten eine Verwendbarkeit in mehreren Waagentypen vorgesehen ist, hinsichtlich der Gesamtanzahl der Baugruppen jedoch immer noch eine relativ grosse Vielfalt herrscht. Insbesondere müssen für Waagen, die mit verschieden grossen Waagschalen ausgestattet sein sollen, beispielsweise kleinen oder mittleren oder grossen Waageschalen, Massnahmen zur deren stabiler Ankopplung an die Wägezelle getroffen werden. So kann ab einer gewissen Waagschalengrösse diese nicht mehr in Einpunktankopplung mittels eines Konus gehaltert werden, da sonst Eckenlasteffekte einen zu grossen Einfluss auf das Wägeergebnis haben können. Auch an eine Überlastschutzvorrichtung sind hinsichtlich der Grösse der Waagschale unterschiedliche Anforderungen zu richten, das heisst mit zunehmender Waagschalengrösse nimmt der Einfluss seitlicher Momente, die auf die Vorrichtung zur Kraftübertragung einwirken können und letztlich zu deren Zerstörung führen können zu. Diese seitlichen Momente gilt es abzufangen.

Aufgabe der vorliegenden Erfindung ist es daher, die Komponenten einer Waage derart aufeinander abzustimmen, dass für eine hohe Vielfalt an Waagentypen innerhalb einer Waagenfamilien möglichst wenige Baugruppen zur Verfügung gestellt werden müssen.

Gelöst wird diese Aufgabe mit den Merkmalen des Anspruchs 1. Ein Wägezellenmodul mit einer Vorrichtung zur Kraftübertragung, die über eine Parallelführung mit einem vertikal auslenkbaren Parallelogrammschenkel und mit einem feststehenden Parallelogrammschenkel verfügt, weist sowohl einen Aufnahmebereich für eine erste Halterung zur Einpunktankopplung einer Waagschale, als auch einen Aufnahmebereich für eine zweite Halterung zur Mehrpunktankopplung, insbesondere zur Vierpunktankopplung, einer Waagschale auf, welcher erste und zweite Aufnahmebereich jeweils mit der Vorrichtung zur Kraftübertragung verbunden ist. Auf diese Weise ist das Wägezellenmodul für die Herstellung von verschiedenen Waagentypen einer Waagenfamilie, von denen vorwiegend jeder für eine unterschiedliche Maximallast ausgelegt ist, verwendbar.

Für die verschiedenen Typen einer Waagenfamilie, welche sich häufig hinsichtlich der Grösse und Ankopplung ihrer Waagschale an die Wägezelle unterscheiden, insbesondere, ob eine Waagschale über eine Mehrpunkt-, meist eine Vierpunktankopplung oder in einer so genannten Einpunktankopplung beispielsweise über einen Konus als Halterung mit dem vertikal beweglichen Parallelogrammschenkel der Vorrichtung zur Kraftübertragung verbunden ist, bietet das Wägezellenmodul gemäss der Erfindung beide Möglichkeiten der Waagschalenankopplung und damit eine hohe Flexibilität. Bei der Produktion verschiedener Waagentypen innerhalb einer Waagenfamilie kann somit eine grosse Vielfalt an Waagentypen entstehen bei gleichzeitig geringer Anzahl von zu verwendenden Baugruppen beziehungsweise Modulbausteinen.

Ein erfindungsgemäss gestaltetes Wägezellenmodul wird bevorzugt ausserhalb der Waage montiert und abgeglichen, was gleichgeartete Wägezellenmodule für einen spezifizierten Waagentyp austauschbar macht. Insbesondere bietet die Eigenschaft des separat abgleichbaren Wägezellenmoduls Vorteile bei Service-Einsätzen, wenn beispielsweise ausserhalb der Herstellerfirma ein Austausch des Wägezellenmoduls erforderlich wird.

In einer besonderen Ausführungsform eines Wägezellenmoduls ist sowohl der Aufnahmebereich für die erste Halterung zur Einpunktankopplung einer Waagschale, als auch der Aufnahmebereich für die zweite Halterung zur Mehrpunktankopplung, insbesondere zur Vierpunktankopplung, einer Waagschale vermittels eines Zwischenstücks mit der Vorrichtung zur Kraftübertragung verbunden. Dieses Zwischenstück ist bevorzugt für den Fall des Vorhandenseins einer Überlastschutzvorrichtung ein Teil dieser Überlastschutzvorrichtung.

Die Überlastschutzvorrichtung weist in einer besonders bevorzugten Form eine Hilfsparallelführung mit einem oberen und einem unteren Lenker auf, wobei die Lenker an ihrem jeweils einen Ende durch den vertikal auslenkbaren Parallelogrammschenkel der Vorrichtung zur Kraftübertragung und an ihrem jeweils entgegen gesetzten Ende durch mindestens ein Verbindungsglied parallelogrammartig verbunden sind. Sowohl der Aufnahmebereich für die erste Halterung, als auch der Aufnahmebereich für die zweite Halterung ist an dem Verbindungsglied der Hilfsparallelführung angeordnet.

Die Überlastschutzvorrichtung verfügt in einer besonders vorteilhaften Ausgestaltung über eine innerhalb des Lastbereichs die Waagschale und den vertikal beweglichen Parallelogrammschenkel starr koppelnde vorgespannte Feder, insbesondere eine Schraubfeder, die an die Maximallast, für welche das Wägezellenmodul spezifiziert ist, angepasst ist.

In einer bevorzugten Weiterbildung des Wägezellenmoduls verfügt die Überlastschutzvorrichtung über erste Anschlagmittel und von diesen räumlich getrennte zweite Anschlagmittel, wobei die zweiten Anschlagmittel derart ausgelegt sind, dass sie im Zusammenhang mit einem für eine Mehrpunktankopplung der Waagschale verwendeten Wägezellenmodul zusätzlich zu den ersten Anschlagmitteln wirksam werden.

In einer anderen Ausgestaltung ist ein Grundkörper vorhanden, mit welchem eine feste Verbindung zwischen dem feststehenden Parallelogrammschenkel der Vorrichtung zur Kraftübertragung und einem Gehäuse herstellbar ist. Der in besonderer Ausgestaltung mit einem U-förmigen Profil versehene Grundkörper ist für die Aufnahme von Kraftübertragungsvorrichtungen verschiedener Grösse, welche für verschiedene Maximallasten spezifiziert sind, ausgelegt. Ferner weisen die Anschlagmittel der Überlastschutzvorrichtung mindestens einen am Grundkörper angebrachten Anschlag auf.

Auf diese Weise ist das Wägezellenmodul eigensicher, das heisst, es ist unabhängig von an einem Gehäuse angebrachten Anschlägen der Überlastschutzvorrichtung, was eine besondere Anpassung des Gehäuses an das Wägezellenmodul erforderlich machen würde, da bekanntermassen die Anschlagsabstände genauestens eingestellt werden müssen.

Der Aufnahmebereich für die zweite Halterung zur Mehrpunktankopplung, insbesondere zur Vierpunktankopplung, einer Waagschale ist jeweils beidseits an der Vorrichtung zur Kraftübertragung oder, falls vorhanden, am Zwischenstück, insbesondere an dem Hilfsparallelogramm der Überlastschutzvorrichtung, angeordnet. Er weist einen gerippten Oberflächenbereich auf, und die zweite Halterung weist zwei Streben mit ebenfalls jeweils einem gerippten Oberflächenbereich auf. Dabei ist durch Ineinandergreifen der jeweiligen gerippten Oberflächenbereiche einer Strebe einerseits und eines Aufnahmebereichs andererseits eine form- und kraftschlüssige Verbindung zwischen diesen herstellbar.

Im Falle der Verwendung noch grösserer mittels Mehrpunktankopplung anbringbarer Waagschalen sind die beiden Streben durch Querstreben zu einem Rahmen ergänzbar, auf welchem sich die Waagschalenankopplungsstellen befinden. Es sei an dieser Stelle erwähnt, dass zur Minimierung von Eckenlasteffekten, es für eine an einer Waage angebrachten Waagschale erforderlich ist, die Befestigungsstellen möglichst nahe dem Rand der Waagschale zu platzieren.

In einer besonders bevorzugten Ausführungsform eines Wägezellenmoduls weisen die zweiten Anschlagmittel einen Anschlagbolzen auf, der an einer jeweiligen Strebe beziehungsweise am Rahmen anbringbar ist, wobei im montierten Zustand dieser einstellbar zwischen einem oberen zweiten Anschlag und einem unteren zweiten Anschlag, welche beide am Grundkörper angebracht sind, angeordnet ist.

Das erfindungsgemässe Wägezellenmodul minimiert nicht nur die Variantenvielfalt der Baugruppen für die Waagschalenankopplung und den Überlastschutz, sondern ist darauf ausgelegt auch weitere Komponenten einer Waage, beispielsweise das Kalibriersystem auf wenige variable Elemente der jeweiligen Baugruppe zu reduzieren.

Dies gelingt für das Kalibriersystem dadurch, dass eine Kalibriervorrichtung vorhanden ist, welche eine Kalibriergewichtsaufnahme, ein Kalibriergewicht und eine Vorrichtung zur Kalibriergewichtsankopplung aufweist, wobei die Kalibriergewichtsaufnahme mit der Vorrichtung zur Kraftübertragung verbunden ist, und die Vorrichtung zur Kalibriergewichtsankopplung am Grundkörper angebracht ist. Die derart angeordnete Vorrichtung zur Kalibriergewichtsankopplung - das heisst die für das Auflegen zur Kalibriermessung und wieder Abheben eines Kalibriergewichts auf die und von der Kalibriergewichtsaufnahme notwendigen mechanischen und elektrischen Komponenten - weicht von derjenigen gemäss dem Stand der Technik ab, beispielsweise einer, wie in der EP 0 955 530 A1 offenbart, bei der sich die Vorrichtung zur Kalibriergewichtsankopplung in einer ausschliesslichen Verbindung mit dem Gehäuse befindet.

Für die Herstellung einer Waage, welche zur Messung höherer Lasten geeignet ist, besteht die Modifikation des Wägezellenmoduls hinsichtlich der Kalibriervorrichtung dann lediglich noch in einem an die Maximallast, für welche das Wägezellenmodul spezifiziert ist, anpassbaren Kalibriergewicht.

In einer spezifischen Ausgestaltung des Wägezellenmoduls ist die Parallelführung der Vorrichtung zur Kraftübertragung einstückig aus einem Materialblock gefertigt. Alternativ ist die gesamte Vorrichtung zur Kraftübertragung einstückig aus einem Materialblock gefertigt. Insbesondere arbeitet die Vorrichtung zur Kraftübertragung nach dem Prinzip der elektromagnetischen Kraftkompensation.

Das Wägezellenmodul bildet eine autarke Einheit, die ausbaubar und erweiterbar ist, um eine Waagenfamilie zu generieren, die mit wenig Baugruppen auskommt und dennoch die vom Benutzer geforderte Vielfalt beispielsweise hinsichtlich Maximallast, Auflösung, Kalibriermöglichkeit und Grösse der Waagschale aufweist.

Abgesehen von der Vorrichtung zur Kraftübertragung, sind es in bevorzugter Weise gerade jene Teile oder Baugruppen mit einem hohen Herstellungsaufwand, die in einem erfindungsgemässe Wägezellenmodul für sämtliche Typen einer Waagenfamilie verwendet werden können, als da sind die Hilfsparallelführung der Überlastschutzvorrichtung, die Vorrichtung zur Kalibriergewichtsankopplung, sowie der Grundkörper sowie die Halterungen zur Ankopplung der Waagschale.

In der folgenden Beschreibung ist die Erfindung anhand von Ausführungsbeispielen unter Bezugnahme auf die teilweise stark schematisierten Zeichnungen näher erläutert. Es zeigen:
- Figur 1: ein Wägezellenmodul, versehen mit einer Halterung für eine Einpunktankopplung einer kleinen Waagschale in dreidimensionaler Darstellung,
- Figur 2: einen Grundkörper in dreidimensionaler Darstellung,
- Figur 3: eine Hilfsparallelführung einer Überlastschutzvorrichtung in Form eines Hilfsparallelogramms in dreidimensionaler Darstellung,
- Figur 4: ein Wägezellenmodul, erweitert mittels Streben und dadurch versehen mit einer Halterung für eine Vierpunktankopplung einer mittleren Waagschale in dreidimensionaler Darstellung,
- Figur 5: ein Wägezellenmodul, teilweise auseinander genommen, in dreidimensionaler Darstellung, wobei das Wägezellenmodul gemäss Figur 1 mittels eines Rahmens erweitert und dadurch für eine Vierpunktankopplung einer grossen Waagschale konfiguriert ist; Figur 5a aus der Sicht von schräg oben und Figur 5b aus der Sicht von schräg unten,
- Figur 6: das Wägezellenmodul aus Figur 5 in zusammengebauter Form in perspektivischer Darstellung,
- Figur 7: ein Wägezellenmodul in einer weiteren Ausführungsform, bei welcher die Streben für eine Erweiterung direkt an der Vorrichtung zur Kraftübertragung befestigbar sind, in stark schematisierter perspektivischer Darstellung in auseinander genommener Form.

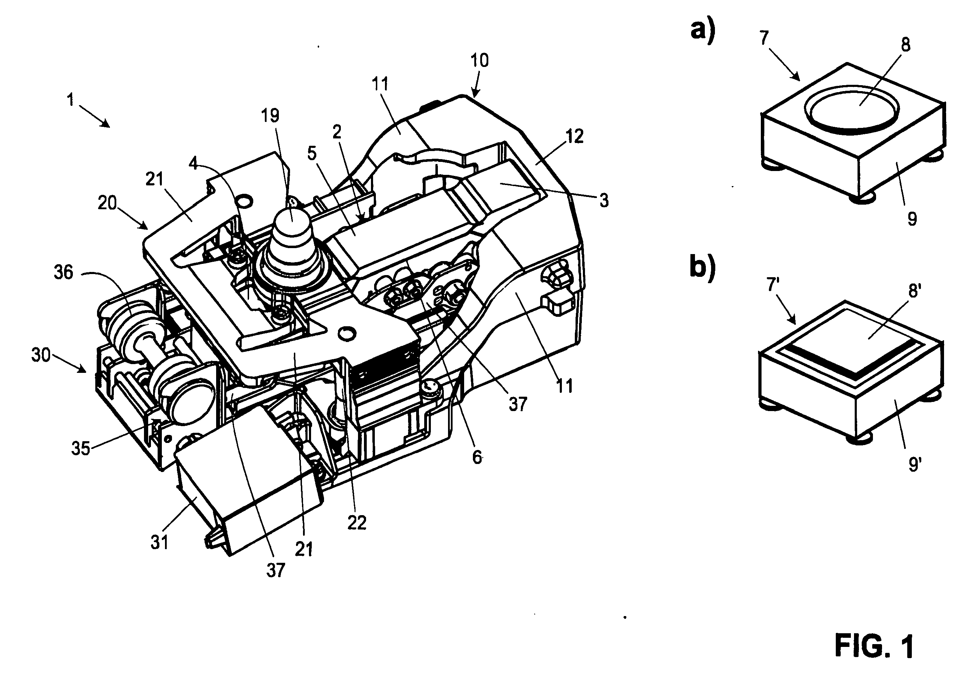

Die Figur 1 zeigt in perspektivischer Darstellung modulartig zusammengebaute Teile einer Wägezelle, im Folgenden als Wägezellenmodul mit dem Bezugszeichen 1 bezeichnet. Das bevorzugt nach dem Prinzip der elektromagnetischen Kraftkompensation arbeitende Wägezellenmodul 1 weist neben elektrischen und elektronischen Komponenten eine Vorrichtung zur Kraftübertragung 2, mit einer Parallelführung, die einen feststehenden 3 und einen beweglichen Paraltelogrammschenkel 4, welche über ein Lenkerpaar 5 (nur ein Lenker 5 ist in der Figur zu sehen) miteinander verbunden sind, aufweist. Die Vorrichtung zur Kraftübertragung 2 ist integrierter Bestandteil eines einstückigen Materialblocks, wobei deren wesentliche Teile - Parallelogramm, Hebelwerk, Koppelelemente und Abstützstellen (hier nicht zu sehen) - durch materialfreie Bereiche in Form von dünnen den Materialblock senkrecht zur Drehebene des mindestens einen Übersetzungshebels durchsetzenden Schnittlinien 6 voneinander abgetrennt sind. Eine solche Kraftübertragungsvorrichtung 2 ist bekannt und ist in der EP 0 518 202 A1 im Detail offenbart. Die Vorrichtung zur Kraftübertragung 2 ist mit ihrem feststehenden Parallelogrammschenkel 3 in einem U-förmigen Grundkörper 10 zwischen dessen U-Schenkeln 11 an dessen Basis 12 form- und kraftschlüssig befestigt. Zu diesem Zweck sind die jeweiligen Anlageflächen sowohl der Vorrichtung zur Kraftübertragung 2 als auch des Grundkörpers 10 eben und mit geringen Toleranzen gefertigt.

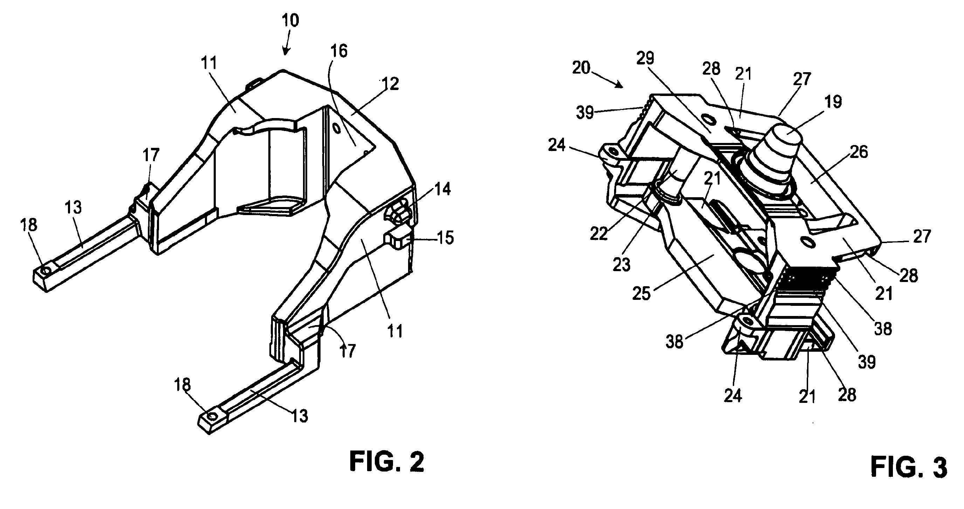

Mit der Kraftübertragungsvorrichtung 2 fest verbunden ist eine Hilfsparallelführung 20 einer Überlastschutzvorrichtung, die am beweglichen Parallelogrammschenkel 4 der Vorrichtung zur Kraftübertragung 2 angebracht ist. Diese Hilfsparallelführung 20 ist in sich gefaltet, das heisst, ihre Lenker 21 erstrecken sich zunächst in den Bereich ausserhalb der Kraftübertragungsvorrichtung 2, bevor sie nach einer Umlenkung sich seitlich der Kraftübertragungsvorrichtung 2 aufgeteilt in zwei Teilstücken fortsetzen und etwa seitlich des beweglichen Schenkels 4 jeweils einen Führungsbolzen 22, obere und untere Lenker 21 miteinander verbindend, aufweisen. Diese Hilfsparallelführung 20 ist in der Figur 3 zu sehen und wird anhand dieser weiter unten im Detail beschrieben.

Am dem Befestigungsbereich der Vorrichtung zur Kraftübertragung 2 am Grundkörper 10 gegenüber liegenden Ende des Wägezellenmoduls 1 ist direkt am Grundkörper 10 eine Vorrichtung zur Kalibriergewichtsankopplung 30 befestigt. Eine Kalibriergewichtsaufnahme 35, die während der Kalibriermessung das Kalibriergewicht 36 aufnimmt, ist an einer Hebelverlängerung 37, die direkt an der Kraftübertragungsvorrichtung 2, insbesondere an einem Hebel derselben angebracht ist, befestigt. Eine solche Kalibriervorrichtung ist bekannt und in der EP 0 955 530 A1 offenbart, wobei für die dort beschriebene Kalibriervorrichtung allerdings deren Vorrichtung zur Kalibriergewichtsankopplung nicht an einem Grundkörper, sondern am Waagengehäuse befestigt ist. Die Vorrichtung zur Kalibriergewichtsankopplung 30 weist einen Elektromotor, welcher im Motorgehäuse 31 untergebracht ist, zum Anheben und Absenken des Kalibriergewichts 36 auf die Kalibriergewichtsaufnahme 35 auf.

In verkleinerten Darstellungen a) und b) sind rechts oben in Figur 1 entsprechende mit einem oben beschriebenen Wägezellenmodul 1 ausgestattete Waagen 7, 7' schematisch eingezeichnet, wobei die Waage 7 mit einer runden Waagschale 8 und die Waage 7' mit einer rechteckigen Waagschale 8', beide jeweils in Einpunktankopplung aufgebracht, versehen ist.

Zur Aufnahme der Waagschale 8, 8' ist am mit den umgelenkten und aufgeteilten Enden der Lenker 21 verbundenen Schenkel der Hilfsparallelführung 20 der Überlastschutzvorrichtung ein Konus 19 angebracht. Auf diesen Konus 19 ist die Waagschale 8, 8' entweder direkt oder gegebenenfalls vermittels eines Waagschalenträgers (hier nicht sichtbar) in einer sogenannten Einpunktankopplung aufsetzbar.

Ein solches in Figur 1 dargestelltes Wägezellenmodul 1 wird bevorzugt in Waagen für den Lastbereich bis etwa um ein Kilogramm verwendet, wobei die Vorrichtung zur Kraftübertragung 2 sowie das Kalibriergewicht 36 und die Federn der Überlastschutzvorrichtung (siehe im Zusammenhang mit Figur 3) ebenfalls für diesen Lastbereich optimierte Baugruppen sind.

Die Figur 2 zeigt den U-förmigen Grundkörper 10 in dreidimensionaler Darstellung. Der vorzugsweise einstückig als Gussteil hergestellte Grundkörper 10 besteht aus einer Basis 12 und zwei U-Schenkeln 11. Am basisfernen Ende weisen die U-Schenkel 11 jeweils einen seitlichen nach aussen versetzten Ausleger 13 auf, an welchen die Vorrichtung zur Kalibriergewichtsankopplung 30 (siehe Figur 1) vermittels einer Schraubverbindung in den Gewindelöchern 18 befestigtbar ist. Der Absatz 17 am anderen Ende des Auslegers 13 fungiert als erster Anschlag im Zusammenwirken mit der Überlastschutzvorrichtung 20. Die Befestigungsfläche 16 an der Innenseite des U-förmigen Grundkörpers 10 ist, wie bereits oben erwähnt, mit geringen Toleranzen gefertigt, um in eine präzise Anlage mit der ebenfalls mit entsprechend geringen Toleranzen gefertigten Stirnfläche der Vorrichtung zur Kraftübertragung 2 zu gelangen.

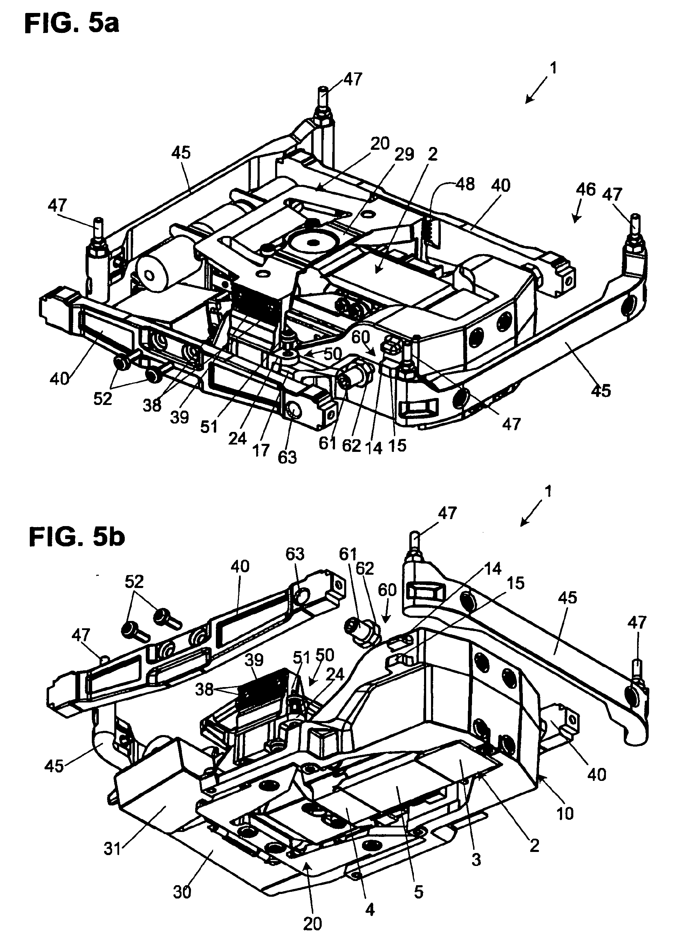

Der Grundkörper 10 weist an seiner Unterseite hier nicht sichtbare Schraubgewinde auf, mittels derer er beispielsweise an der hier ebenfalls nicht sichtbaren Bodenplatte eines Waagengehäuses 9, 9' (siehe verkleinerte Darstellungen a) und b) der Figur 1) befestigbar ist. Mit den Bezugszeichen 14 und 15 sind ein oberer und ein unterer zweiter Anschlag für die Überlastschutzvorrichtung gekennzeichnet, wie weiter unten im Zusammenhang mit den Figuren 5a und 5b näher erläutert wird.

Die Figur 3 zeigt, ebenfalls in perspektivischer Darstellung, eine Hilfsparallelführung 20 der Überlastschutzvorrichtung. Diese ist mit je einer Befestigungsstelle 26 eines oberen und eines unteren Lenkers 21 am beweglichen Parallelogrammschenkel 4 der Vorrichtung zur Kraftübertragung 2 jeweils oben und unten vorzugsweise mittels einer Schraubverbindung befestigbar. Aufgrund der gefalteten Struktur weisen die Lenker 21 an den der Befestigung abgewandten Enden Umkehrstellen 27 auf und verlaufen, jeweils aufgeteilt, an den Aussenseiten parallel zu den zwischen den Teilstücken der Lenker 21 mittig angeordneten Befestigungsstellen 26. Nahe der Umkehrstellen 27 sind die Teilstücke der Lenker 21 mit Biegelagern 28 versehen. Weitere Biegelager 28 bilden den Übergang zu einem Lastaufnahmebereich 29 der Hilfsparallelführung 20. Hier sind die oberen und unteren Lenker 21 eine Art Käfig bildend mit einander verbunden und stehen zusätzlich über zwei innerhalb dieses Käfigs angeordnete Führungsbolzen 22 (nur einer ist zu sehen) miteinander in Kontakt. Am Lastaufnahmebereich 29 der Hilfsparallelführung ist oben der Konus 19 zur Aufnahme einer Waagschale oder gegebenenfalls eines Waagschalenträgers befestigt. Im Überlastfall lenkt der Lastaufnahmebereich 29 an den Biegegelenken 28 gegenüber der mit der Vorrichtung zur Kraftübertragung 2 verbundenen Befestigungsstellen 26 aus.

Die Hilfsparallelführung 20 weist an der dem Befestigungsbereich des Konus 19 gegenüberliegenden Seite, innerhalb des Käfigs angeordnet, eine Auflageplatte 25 auf, die von den beiden Führungsbolzen 22 berührungsfrei durchdrungen wird. Die Auflageplatte 25 ist fest mit dem vertikal beweglichen Parallelogrammschenkel 4 der Vorrichtung zur Kraftübertragung 2 verbunden. Die Führungsbolzen 22 sind jeweils von einer Spiralfeder 23, die in der Zeichnung lediglich angedeutet ist, umschlungen, wobei sich die Spiralfedern 23 an der Auflageplatte 25 abstützen. Im Normalbetrieb befinden sich die Auflageplatte 25 und der den Käfig bildende Lastaufnahmebereich 29 in Kontakt, das heisst die Hilfsparallelführung 20 verhält sich als starrer Körper. Wird der Lastaufnahmebereich 29 jedoch mit einer zu hohen Last beaufschlagt, so lenkt er gegenüber der Auflageplatte 25, die beiden Federn 23 zusammendrückend aus und schlägt am Grundkörper 10 im Bereich des Absatzes 17 (siehe Figur 2) an. Die beiden mit einer Öffnung versehenen Laschen 24 bilden die Aufnahme für jeweils einen entsprechenden Anschlagbolzen (siehe Figuren 5a und 5b).

Auf beiden Seiten des Lastaufnahmebereichs 29 ist die Aussenfläche 39 gerippt und mit jeweils zwei Gewindelöchern 38 versehen. Hier können der Erweiterung für die Verwendung des Wägezellenmoduls 1 in einem höheren Lastbereich dienende Teile montiert werden, welche weiter unten näher erläutert werden.

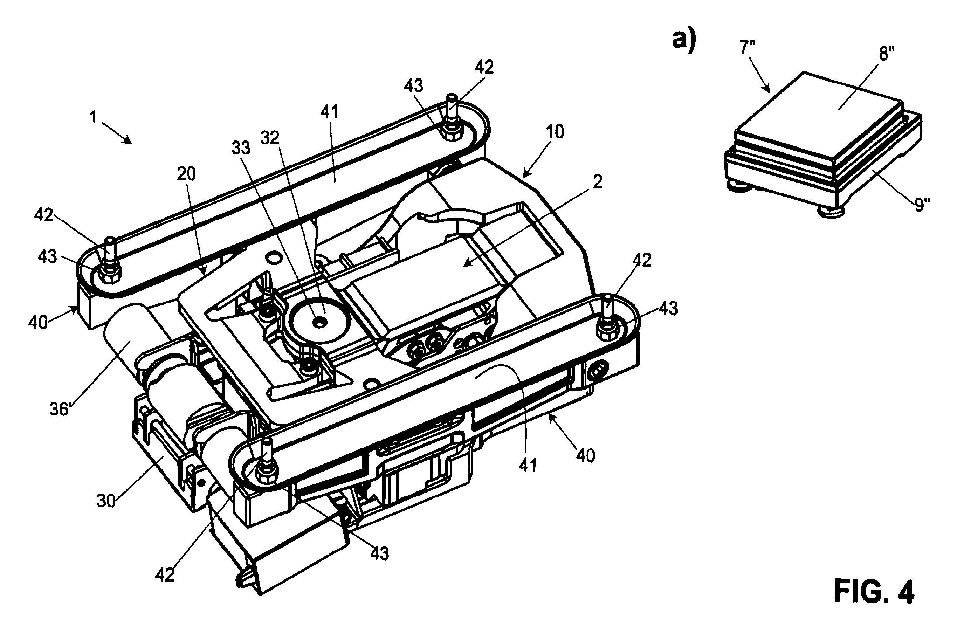

Figur 4 zeigt das für die Vierpunktankopplung einer mittleren, vorzugsweise rechteckigen Waagschale 8'' (hier in der verkleinerten Darstellung a) einer entsprechenden Waage 7'' zu sehen) erweiterte Wägezellenmodul 1. Für die Erweiterung wurden am Wägezellenmodul 1 gemäss Figur 1 lediglich der Konus 19 entfernt, und an jeder Seite der Hilfsparallelführung 20 eine Strebe 40, die an ihrer Oberseite eine Wanne 41 trägt, angebracht. Die Wanne 41 dient dem Schutz der Waage vor eindringendem Tropfwasser. An den beiden Enden jeder Wanne 41 vorstehend sind Auflagebolzen 42 für die Waagschale an den Streben 40 angebracht, wobei deren Befestigungsmuttern 43 die jeweilige Wanne 41 an der entsprechenden Strebe fixiert.

Die Hilfsparallelführung 20 der Überlastschutzvorrichtung dient demnach als Zwischenstück für die Verbindung einer Waagschale an den vertikal beweglichen Parallelogrammschenkel 4 der Vorrichtung zur Kraftübertragung 2, sowohl in Einpunktankopplung mittels des Konus 19 als auch in Vierpunktankopplung mittels der Streben 40 und der Auflagebolzen 42.

In der Figur ist der Aufnahmebereich 32 für den hier entfernten Konus 19 zu sehen, sowie die Gewindebohrung 33, mittels welcher der Konus 19 am Lastaufnahmebereich 29 befestigt wird.

Im Produktionsprozess müssen lediglich wenige Baugruppen ergänzt oder alternativ eingebaut werden - beispielsweise die Vorrichtung zur Kraftübertragung -, um an Stelle eines Wägezellenmoduls 1 für eine Waage mit kleiner Waagschale 8, 8', d.h. in Einpunktankopplung ein solches für eine Waage mit mittlerer Waagschale 8'', d.h. in Vierpunktankopplung herzustellen. Da in der Regel solche mittleren Waagschalen 8'' bei Waagen 7'', die für einen höheren Lastbereich, ausgelegt sind, Einsatz finden, wird bei der Montage eines hierfür geeigneten Wägezellenmoduls 1 vorzugsweise lediglich eine für entsprechend höhere Lasten ausgelegte Kraftübertragungsvorrichtung 2, eine bei höheren Überlasten in Wirkung tretenden Überlastschutzvorrichtung 20, was lediglich durch ein Paar von Schraubfedern 23 mit grösserer Federkonstante bewerkstelligt werden muss, und ein grösseres Kalibriergewicht 36', verwendet. Ansonsten sind sämtliche Baugruppen des Wägezellenmoduls 1, das heisst der Grundkörper 10 die Hilfsparallelführung 20 und die Vorrichtung zur Kalibriergewichtsankopplung 30 die gleichen, wie für ein Wägezellenmodul 1, welches für Waagen 7, 7' im Niederlastbereich Einsatz findet.

In den Figuren 5a und 5b ist ein Wägezellenmodul 1 teilweise auseinander genommen in perspektivischer Darstellung gezeigt, wobei Figur 5a eine Ansicht von schräg oben und Figur 5b eine Ansicht von schräg unten wiedergibt. Während die in der Figur 4 gezeigten Wannen 41 hier nicht dargestellt sind, ist das dort gezeigte Wägezellenmodul 1 durch Querstreben 45, die mit den Streben 40 einen Rahmen 46 bilden, ergänzt. Ein solcher durch Verschrauben der Streben 40 mit den Querstreben 45 gebildeter Rahmen 46, der ebenfalls mit vier Auflagebolzen 47, die an den äusseren Enden der Querstreben 45 angebracht sind, versehen ist, ist wiederum für eine grosse Waagschale, das heisst mit einer gegenüber derjenigen, für die das nach Figur 4 erweiterte Wägezellenmodul 1 geeignet ist, grösseren Auflagefläche versehenen Waagschale, in Vierpunktankopplung verwendbar.

Wie aus Figur 5a ausserdem hervorgeht, sind die Streben 40 mit einem Verbindungsbereich 48 versehen, der entsprechend demjenigen der Aussenfläche 39 des Lastaufnahmebereichs 29 der Hilfsparallelführung 20 gerippt ist, so dass beide Rippenstrukturen ineinander eingreifend einen Kraft- und Formschluss bilden, der eine Strebe 40 ohne Spiel mit der Überlastschutzvorrichtung 20 verbindet. Auf diese Weise können mittels der in den Gewindelöchern 38 eingedrehten Schrauben 52 befestigten Streben 40 unverrückbar positioniert werden.

Sowohl in Figur 5a als auch in Figur 5b sind erste Anschlagmittel 50 und zweite Anschlagmittel 60 der Überlastschutzvorrichtung 20 erkennbar. Die ersten Anschlagmittel 50 umfassen eine Schraube 51, die in die Öffnung der Lasche 24 eingedreht, eine stabile Position einnimmt, und dem Absatz 17, an welchem die Schraube 51 im Überlastfall, das heisst, wenn die Hilfsparallelführung 20 gegenüber dem beweglichen Parallelogrammschenkel 4 der Vorrichtung zur Kraftübertragung 2 auslenkt, anschlägt. Die ersten Anschlagmittel 50 sind für ein Wägezellenmodul 1, unabhängig von dessen Einsatz in Waagen mit kleinerer, mittlerer oder grosser Waagschale vorhanden. Sie dienen hauptsächlich dem Abfangen senkrecht nach unten auf die Vorrichtung zur Kraftübertragung 2 wirkender Überlasten.

Die zweiten Anschlagmittel 60 sind lediglich für den Einsatz eines Wägezellenmoduls 1 in Waagen mit mittleren oder grossen Waagschalen vorgesehen. Aus diesem Grund ist ein mit einer Kontermutter 62 versehener Bolzen 61, der in eine dafür vorgesehene Öffnung 63 mit Innengewinde in jeder Strebe 40 eingeschraubt wird, vorhanden. Das überstehende Ende des Bolzens 61 ist im montierten Zustand zwischen dem oberen zweiten Anschlag 14 und dem unteren zweiten Anschlag 15 angeordnet und kommt zur Wirkung bei sowohl nach oben als auch nach unten wirkenden Überlasten. Insbesondere wirken die zweiten Anschlagmittel auch als Sicherung gegenüber aussermittig eingeleiteten Momenten, insbesondere Kippmomenten.

Auf diese Weise wurde für das Wägezellenmodul 1 eine Überlastschutzvorrichtung 20 mit hierarchisch wirkenden Anschlagmitteln 50, 60 im Überlastfall geschaffen.

Die ersten und zweite Anschlagmittel 50, 60 sind hinsichtlich einer Auslenkung der Hilfsparallelführung 20 im Überlastfall einstellbar. Dies wird einerseits für die ersten Anschlagmittel 50 vermittels der eindrehbaren Schraube 51, betreffend deren Abstand zum Absatz 17 erreicht und andererseits im Falle der zweiten Anschlagmittel 60 dadurch, dass der Bolzen 61 als Excenter ausgebildet ist und je nach Befestigung in der Öffnung 63 zum zweiten oberen Anschlag 14 oder zum zweiten unteren Anschlag 15 einen entsprechend geringeren oder grösseren Abstand hat. Diese Form des Abgleichs der Überlastvorrichtung 20 wird in der Regel einmal, nämlich beim Abgleich des Wägezellenmoduls 1, vor dessen Einbau in ein Waagengehäuse 9, 9', 9'', 9''' durchgeführt.

Im Übrigen wird durch die vom Stand der Technik, das heisst am Gehäuse angebrachten Anschlagmittel, abweichende Ausgestaltung der Anschlagmittel 50, 60, nämlich deren Integration im Wägezellenmodul 1, eine Verbesserung der Toleranzen hinsichtlich deren Anschlags-Abstände erreicht und damit der Wirksamkeit insbesondre hinsichtlich der Reproduzierbarkeit verbessert.

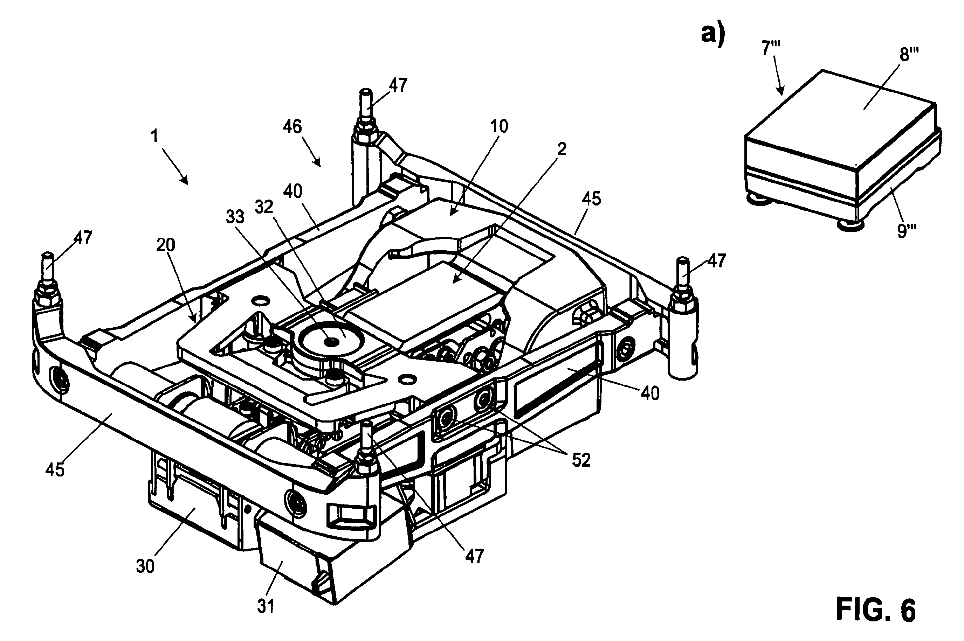

Die Figur 6 zeigt das Wägezellenmodul aus den Figuren 5a und 5b in montierter Form aus einer Sicht von schräg oben. Hier ist klar erkennbar, wie sich die Streben 40 und die Querstreben 45 zum Rahmen 46 zusammensetzen. Die Auflagebolzen 47 sind so angeordnet, dass eine grosse rechteckförmige Waagschale 8''' möglichst nahe ihrer Ecken abstützen. In der verkleinerten Darstellung a) zeigt die Figur 6 wiederum eine entsprechende Waage 7''' mit einer grossen rechteckigen Waagschale 8''' und einem Gehäuse 9'''.

Ein solches Wägezellenmodul 1 wird nun, wie auch die in Figur 1 und in Figur 4 gezeigten Wägezellenmodule ausserhalb der Waage abgeglichen und als Baugruppenmodul in eine Waage 7''' eingesetzt. Ins besondere findet dabei auch ein Temperaturabgleich statt, so dass für eine mit einem solchen Wägezellenmodul 1 bestückte Waage die Wägedaten und Wägeparameter von Temperatureinflüssen weitgehend unbeeinflusst bleiben.

Die Erfindung wurde anhand eines Beispiels für ein Wägezellenmoduls mit einem U-förmigen Grundkörper beschrieben. Anhand der erfindungsgemässen Lehre sind auch andere Formen des Grundkörpers, beispielsweise eine Verbindungsplatte oder ein Verbindungssockel, welche jeweils die Vorrichtung zur Kraftübertragung mit einem Gehäuse verbinden, denkbar. Grundsätzlich sind dabei die weiteren Baugruppen des Wägezellenmoduls, wie beispielsweise eine Vorrichtung zur Kalibriergewichtsankopplung oder eine Überlastschutzvorrichtung entweder an der Vorrichtung zur Kraftübertragung oder am Grundkörper angebracht. Es versteht sich von selbst, dass weitere Kalibriergewichtsanordnungen oder weitere Ausführungsformen einer Überlastschutzvorrichtung, die sich in ein beschriebenes Wägezellenmodul integrieren lassen, dem Erfindungsgedanken Rechnung tragen. Insbesondere soll die Vorrichtung zur Kraftübertragung nicht ausschliesslich auf eine solche, die nach dem Prinzip der elektromagnetischen Kraftkompensation arbeitet, begrenzt sein. Im Zusammenhang der Erfindung ist die Verwendung einer mit Dehnmessstreifen als Sensoren beaufschlagten Vorrichtung zur Kraftübertragung ebenso denkbar, wie weitere, hier nicht im Detail spezifizierter Vorrichtungen zur Kraftübertragung.

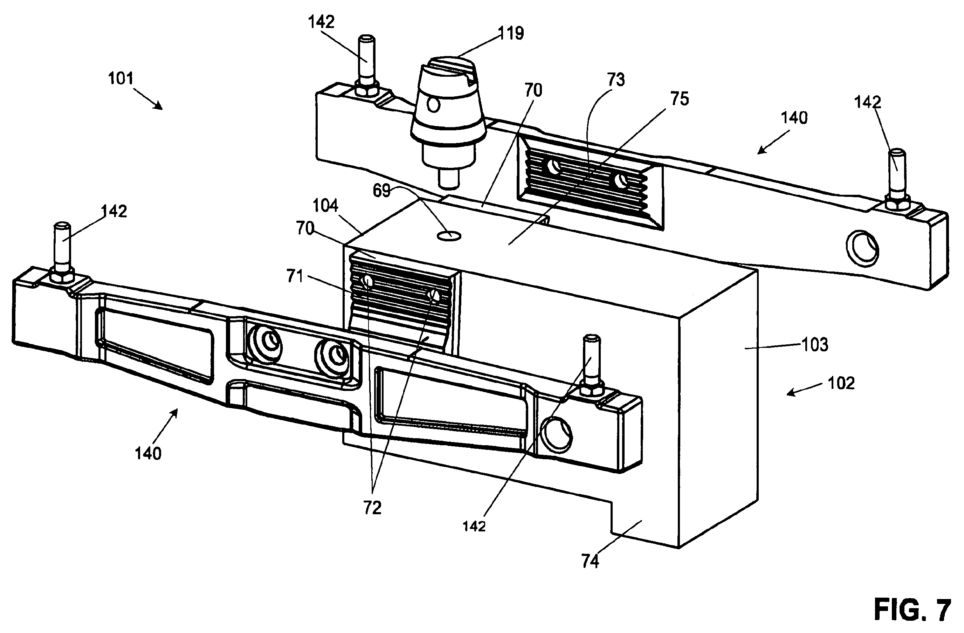

Die Figur 7 zeigt in stark schematisierter Darstellung, dass ein Wägezellenmodul nicht zwingend eine Überlastschutzvorrichtung oder eine Kalibriervorrichtung aufweisen muss. Ein solches Wägezellenmodul findet beispielsweise in einer einfachen Waage mit relativ niederen Anforderungen an ihre Genauigkeit Einsatz. In einer solchen Ausgestaltung des Wägezellenmoduls 101 können wahlweise ein Konus 119 zur Einpunktankopplung einer Waagschale oder zwei Streben 140 mit Auflagebolzen 142 direkt an der Vorrichtung zur Kraftübertragung 102 befestigt werden. In diesem Falle sind auf der Oberseite 75 des vertikal beweglichen Parallelogrammschenkels 104 eine Gewindebohrung 69 zur Aufnahme und Befestigung des Konus 119 und auf beiden Seiten des beweglichen Parallelogrammschenkels 104 ein Befestigungsbereich 70 mit gerippter Aussenfläche 71 und mit jeweils zwei Gewindelöchern 72 zum Anschrauben der Streben 140 vorgesehen. Die Streben 140 sind ihrerseits ebenfalls mit einem gerippten Bereich 73 an ihrer der Vorrichtung zur Kraftübertragung zugewandten Seite versehen. Die Vorrichtung zur Kraftübertragung 102 ist über einen Befestigungsabsatz 74, welcher eine Verlängerung ihres feststehenden Parallelogrammschenkels 103 darstellt, an einem Waagengehäuse oder der Bodenplatte eines solchen befestigbar.

### Bezugszeichenliste

- 1, 101: Wägezellenmodul
- 2, 102: Vorrichtung zur Kraftübertragung
- 3, 103: Feststehender Parallelogrammschenkel
- 4, 104: Vertikal auslenkbarer Parallelogrammschenkel
- 5: Parallelogrammlenker
- 6: Schnittlinien
- 7, 7', 7'', 7''': Waage
- 8, 8', 8'', 8''': Waagschale
- 9, 9', 9'', 9''': Waagengehäuse
- 10: U-förmigen Grundkörper
- 11: U-Schenkel
- 12: Basis
- 13: Ausleger U-Schenkel
- 14: Oberer zweiter Anschlag
- 15: Unterer zweiter Anschlag
- 16: Befestigungsfläche
- 17: Absatz des ersten Anschlags
- 18: Gewindelöcher
- 19,119: Konus
- 20: Hilfsparallelführung der Überlastschutzvorrichtung
- 21: Lenker der Hilfsparallelführung
- 22: Führungsbolzen
- 23: Feder, Schraubfeder
- 24: Lasche
- 25: Auflageplatte
- 26: Befestigungsstelle
- 27: Umkehrstelle
- 28: Biegelager
- 29: Lastaufnahmebereich
- 30: Vorrichtung zur Kalibriergewichtsankopplung
- 31: Motorgehäuse
- 32: Aufnahmebereich für Konus
- 33: Gewindebohrung
- 35: Kalibriergewichtsaufnahme
- 36, 36': Kalibriergewicht
- 37: Hebelverlängerung
- 38: Gewindeloch
- 39: Aussenfläche
- 40, 140: Strebe
- 41: Wanne
- 42, 142: Auflagebolzen
- 43: Befestigungsmutter
- 45: Querstrebe
- 46: Rahmen
- 47: Auflagebolzen
- 48: Verbindungsbereich
- 50: Erste Anschlagmittel
- 51: Schraube
- 52: Schraube
- 60: Zweite Anschlagmittel
- 61: Bolzen
- 62: Kontermutter
- 63: Öffnung mit Innengewinde
- 69: Gewindebohrung
- 70: Befestigungsbereich
- 71: gerippte Aussenfläche
- 72: Gewindelöcher
- 73: gerippter Bereich
- 74: Befestigungsabsatz
- 75: Oberseite des vertikal beweglichen Parallelogrammschenkels 104

## Patentansprüche

1. Wägezellenmodul (1, 101) mit einer Vorrichtung zur Kraftübertragung (2, 102), die über eine Parallelführung mit einem vertikal auslenkbaren Parallelogrammschenkel (4, 104) und mit einem feststehenden Parallelogrammschenkel (3, 103) verfügt, **dadurch gekennzeichnet, dass** sowohl ein Aufnahmebereich (32, 33, 69) für eine erste Halterung (19, 119) zur Einpunktankopplung einer Waagschale (8, 8'), als auch ein Aufnahmebereich (38, 39, 71, 72) für eine zweite Halterung (40, 42, 46, 47, 140, 142) zur Mehrpunktankopplung, insbesondere zur Vierpunktankopplung, einer Waagschale (8'', 8''') mit der Vorrichtung zur Kraftübertragung (2, 102) verbunden ist, wodurch das Wägezellenmodul (1, 101) für die Herstellung von verschiedenen Waagentypen einer Waagenfamilie verwendbar ist.

2. Wägezellenmodul nach Anspruch 1, **dadurch gekennzeichnet, dass** sowohl der Aufnahmebereich (32, 33) für die erste Halterung (19) zur Einpunktankopplung einer Waagschale (8, 8'), als auch der Aufnahmebereich (38, 39) für die zweite Halterung (40, 42, 46, 47) zur Mehrpunktankopplung, insbesondere zur Vierpunktankopplung, einer Waagschale (8", 8"') vermittels eines Zwischenstücks mit der Vorrichtung zur Kraftübertragung (2) verbunden ist.

3. Wägezellenmodul nach Anspruch 2, **dadurch gekennzeichnet, dass** eine Überlastschutzvorrichtung vorhanden ist, und dass das Zwischenstück Teil dieser Überlastschutzvorrichtung ist.

4. Wägezellenmodul nach Anspruch 3, **dadurch gekennzeichnet, dass** die Übertastschutzvorrichtung eine Hitfsparallelführung (20) mit einem oberen und einem unteren Lenker (21) aufweist, wobei die Lenker (21) an ihrem jeweils einen Ende durch den vertikal auslenkbaren Parallelogrammschenkel (4) der Vorrichtung zur Kraftübertragung (2) und an ihrem jeweils entgegen gesetzten Ende durch mindestens ein Verbindungsglied (22, 29) parallelogrammartig verbunden sind, und dass sowohl der Aufnahmebereich (32, 33) für die erste Halterung (19), als auch der Aufnahmebereich (38, 39) für die zweite Halterung (40, 42, 46, 47) an einem Verbindungsglied (29) der Hilfsparallelführung (20) angeordnet sind.

5. Wägezellenmodul nach Anspruch 3 oder 4, **dadurch gekennzeichnet, dass** die Überlastschutzvorrichtung (20) eine an die spezifizierte Maximallast der Vorrichtung zur Kraftübertragung (2) angepasste vorgespannte Feder (23) aufweist, welche im spezifizierten Lastbereich das mindestens eine Verbindungsglied (22, 29) der Hilfsparallelführung (20) mit dem vertikal auslenkbaren Parallelogrammschenkel (4) in starrer Verbindung hält.

6. Wägezellenmodul nach einem der Ansprüche 3, 4 oder 5, **dadurch gekennzeichnet, dass** die Überiastschutzvorrichtung (20) erste Anschlagmittel (50) und von diesen räumlich getrennte zweite Anschlagmittel (60) aufweist, wobei die zweiten Anschlagmittel (60) derart ausgelegt sind, dass sie im Zusammenhang mit einem für eine Mehrpunktankopplung, insbesondere eine Vierpunktankopplung der Waagschale (8", 8''') verwendeten Wägezellenmodul (1) zusätzlich zu den ersten Anschlagmitteln (50) wirksam werden.

7. Wägezellenmodul nach einem der Ansprüche 1 bis 6, **dadurch gekennzeichnet, dass** ein Grundkörper (10) vorhanden ist, mit welchem eine feste Verbindung zwischen dem feststehenden Parallelogrammschenkel (3) der Vorrichtung zur Kraftübertragung (2) und einem Gehäuse herstellbar ist.

8. Wägezellenmodul nach Anspruch 7, **dadurch gekennzeichnet, dass** der Grundkörper (10) für die Aufnahme von Kraftübertragungsvorrichtungen (2) verschiedener Grösse, welche für verschiedene Maximallasten spezifiziert sind, ausgelegt ist.

9. Wägezellenmodul nach Anspruch 7 oder 8, **dadurch gekennzeichnet, dass** die Anschlagmittel (50, 60) der Überlastschutzvorrichtung (20) mindestens einen am Grundkörper (10) angebrachten Anschlag (14, 15, 17) aufweisen.

10. Wägezellenmodul nach einem der Ansprüche 1 bis 9, **dadurch gekennzeichnet, dass** der Aufnahmebereich (38, 39, 71, 72) für die zweite Halterung (40, 42, 46, 47, 140, 142) einen jeweils beidseits an der Vorrichtung zur Kraftübertragung (102) oder gegebenenfalls am Zwischenstück (20) angeordneten gerippten Oberflächenbereich (39, 71) aufweist, und dass die zweite Halterung (40, 42, 46, 47, 140, 142) zwei Streben (40, 140) mit jeweils einem gerippten Oberflächenbereich (48, 73) aufweist, wobei durch Ineinandergreifen der jeweiligen gerippten Oberflächenbereiche (39, 48, 71, 73) einer Strebe (40) einerseits und eines Aufnahmebereichs (38, 39, 71, 72) andererseits eine formschlüssige Verbindung zwischen diesen herstellbar ist.

11. Wägezellenmodul nach einem der Ansprüche 1 bis 9, **dadurch gekennzeichnet, dass** der Aufnahmebereich (38, 39, 71, 72) für die zweite Halterung (40, 42, 46, 47, 140, 142) einen jeweils beidseits an der Vorrichtung zur Kraftübertragung (102) oder gegebenenfalls am Zwischenstück (20) angeordneten gerippten Oberflächenbereich (39, 71) aufweist, und dass die zweite Halterung (40, 42, 46, 47, 140, 142) einen Rahmen (46) aufweist, wobei durch Ineinandergreifen der jeweiligen gerippten Oberflächenbereiche (39, 48, 71, 73) des Rahmens (46) einerseits und des Aufnahmebereichs (38, 39, 71, 72) andererseits eine formschlüssige Verbindung zwischen diesen herstellbar ist.

12. Wägezellenmodul nach Anspruch 11, **dadurch gekennzeichnet, dass** der Rahmen (46) durch das Ergänzen der Streben (40) mittels Querstreben (45) entsteht.

13. Wägezellenmodul nach einem der Ansprüche 10 bis 12, **dadurch gekennzeichnet, dass** für die zweiten Anschlagmittel (60) ein Anschlagbolzen (61) an einer jeweiligen Strebe (40) beziehungsweise am Rahmen (46) anbringbar ist, wobei im montierten Zustand dieser einstellbar zwischen einem oberen zweiten Anschlag (14) und einem unteren zweiten Anschlag (15), welche beide am Grundkörper (10) angebracht sind, angeordnet ist.

14. Wägezellenmodul nach einem der Ansprüche 7 bis 13, **dadurch gekennzeichnet, dass** eine Kalibriervorrichtung, welche eine Kalibriergewichtsaufnahme (35), eine Vorrichtung zur Kalibriergewichtsankopplung (30) und ein Kalibriergewicht (36, 36') aufweist, vorhanden ist, wobei die Kalibriergewichtsaufnahme (35) mit der Vorrichtung zur Kraftübertragung (2) verbunden ist, und die Vorrichtung zur Kalibriergewichtsankopplung (30) am Grundkörper (10) angebracht ist.

15. Wägezellenmodul nach Anspruch 14, **dadurch gekennzeichnet, dass** die Kalibriervorrichtung ein an die Maximallast, für welche die Vorrichtung zur Kraftübertragung (2) spezifiziert ist, anpassbares Kalibriergewicht (36, 36') aufweist.

16. Wägezellenmodul nach einem der Ansprüche 1 bis 15, **dadurch gekennzeichnet, dass** die Parallelführung der Vorrichtung zur Kraftübertragung (2, 102) einstückig aus einem Materialblock gefertigt ist.

17. Wägezellenmodul nach einem der Ansprüche 1 bis 16, **dadurch gekennzeichnet, dass** die Vorrichtung zur Kraftübertragung (2, 102) eine nach dem Prinzip der elektromagnetischen Kraftkompensation arbeitende ist, welche insbesondere einstückig aus einem Materialblock gefertigt ist.

## Claims

1. Weighing cell module (1, 101) with a force-transfer mechanism (2, 102) that includes a parallel-guiding linkage with a vertically movable parallelogram leg (4, 104) and a spatially fixed parallelogram leg (3, 103), **characterized in that** a mounting area (32, 33, 69) for a first weighing-pan support device (19, 119) with a single-point connection of a weighing pan (8, 8') is connected to the force-transfer mechanism (2, 102), and a mounting area (38, 39, 71, 72) for a second weighing-pan support device (40, 42, 46, 47, 140, 142) with a multiple-point connection, particularly a four-point connection, of a weighing pan (8", 8'''), is likewise connected to the force-transfer mechanism (2, 102), so that the weighing cell module (1, 101) can be used to manufacture different types of balances in a design family of balances.

2. Weighing cell module according to claim 1, **characterized in that** the mounting area (32, 33) for the first weighing-pan support device (19) with the single-point connection of a weighing pan (8, 8') as well as the mounting area (38, 39) for the second weighing-pan support device (40, 42, 46, 47) with the multiple-point connection, particularly the four-point connection, of a weighing pan (8", 8'''), are joined to the force-transfer mechanism (2) by means of an intermediate part.

3. Weighing cell module according to claim 2, **characterized in that** an overload protection device is provided and that the intermediate part is a component of the overload protection device.

4. Weighing cell module according to claim 3, **characterized in that** the overload protection device comprises a secondary parallelogram linkage (20) with an upper and a lower guide arm (21), wherein one end of each guide arm (21) is connected to the vertically movable parallelogram leg (4) of the force-transfer mechanism (2) and a respectively opposite end of each guide arm (21) is connected to at least one connecting member (22, 29), so that the guide arms (21) tie the connecting member (29) and the vertically movable parallelogram leg (4) together in the manner of a parallelogram linkage, and further **characterized in that** the mounting area (32, 33) for the first weighing-pan support device (19) as well as the mounting area (38, 39) for the second weighing-pan support device (40, 42, 46, 47) are arranged on the connecting member (29) of the secondary parallel-guiding linkage (20).

5. Weighing cell module according to claim 3 or 4, **characterized in that** the overload protection device (20) comprises a pre-tensioned spring (23) which is adapted to a specified maximum load of the force-transfer-device (2) and - within the specified load range - keeps the at least one connecting member (22, 29) of the secondary parallel-guiding linkage (20) rigidly coupled to the vertically movable parallelogram leg (4).

6. Weighing cell module according to one of the claims 3, 4 or 5, **characterized in that** the overload protection device (20) comprises first displacement-limiting stop means (50) and, spatially separated from the latter, second displacement-limiting stop means (60), wherein the second displacement-limiting stop means (60) are configured in such a way that in a weighing cell module (1) that is used for a multiple-point connection, particularly a four-point connection, of the weighing pan (8", 8'''), the second displacement-limiting stop (60) means become effective in addition to the first displacement-limiting stop means (50).

7. Weighing cell module according to one of the claims 1 to 6, **characterized in that** a chassis body (10) is provided through which the stationary parallelogram leg (3) of the force-transfer mechanism (2) can be rigidly connected to a housing.

8. Weighing cell module according to claim 7, **characterized in that** the chassis body (10) is designed to accommodate force-transfer mechanisms (2) of different sizes which are specified for different maximum loads.

9. Weighing cell module according to claim 7 or 8, **characterized in that** the displacement-limiting stop means (50, 60) of the overload protection device (20) comprise at least one displacement-limiting stop (14, 15, 17) arranged on the chassis body (10).

10. Weighing cell module according to one of the claims 1 to 9, **characterized in that** the mounting area (38, 39, 71, 72) for the second weighing-pan support device (40, 42, 46, 47, 140, 142) has ribbed surface portions (39, 71) arranged on both sides of the force-transfer mechanism (102) or, if applicable, on the intermediate part (20), and that the second weighing-pan support device (40, 42, 46, 47, 140, 142) has two support beams (40, 140), each of which has a ribbed surface portion (48, 73), wherein a form-fitting connection can be established through a mutual engagement of the respective ribbed surface portions (39, 48, 71, 73) of a support beam (40) and a mounting area (38, 39, 71, 72).

11. Weighing cell module according to one of the claims 1 to 9, **characterized in that** the mounting area (38, 39, 71, 72) for the second weighing-pan support device (40, 42, 46, 47, 140, 142) has ribbed surface portions (39, 71) arranged on both sides of the force-transfer mechanism (102) or, if applicable, on the intermediate part (20), and that the second weighing-pan support device (40, 42, 46, 47, 140, 142) has a frame (46), wherein a form-fitting connection can be established through a mutual engagement of the respective ribbed surface portions (39, 48, 71, 73) of the frame (46) and the mounting area (38, 39, 71, 72).

12. Weighing cell module according to claim 11, **characterized in that** the frame (46) is formed by adding transverse connectors (45) to the support beams (40).

13. Weighing cell module according to one of the claims 10 to 12, **characterized in that** the second displacement-limiting stop means (60) include a displacement-limiting bolt (61) which can be attached to the support beam (40) or to the frame (46), respectively, wherein the displacement-limiting bolt (61), in the assembled condition of the weighing cell module, is arranged between an upper second displacement-limiting stop (14) and a lower second displacement-limiting stop (15) which are both arranged on the chassis body (10).

14. Weighing cell module according to one of the claims 7 to 13, **characterized in that** a calibration device is provided which comprises a calibration weight receiver (35), a weight-handling device (30) to apply and remove a calibration weight, and a calibration weight (36, 36'), wherein the calibration weight receiver (35) is connected to the force-transfer mechanism (2) and the calibration weight-handling device (30) is connected to the chassis body (10).

15. Weighing cell module according to claim 14, **characterized in that** the calibration device comprises a calibration weight (36, 36') that is adaptable to the maximum load specified for the force-transfer mechanism (2).

16. Weighing cell module according to one of the claims 1 to 15, **characterized in that** the parallel-guiding linkage of the force-transfer mechanism (2, 102) is made as one single piece from a block of material.

17. Weighing cell module according to one of the claims 1 to 15, **characterized in that** the force-transfer mechanism (2, 102) is a device that operates according to the principle of electromagnetic force compensation and, in particular, is made as one single piece from a block of material.

## Revendications

1. Module de cellule de pesée (1, 101) avec un dispositif de transmission de force (2, 102), qui dispose d'un guidage parallèle avec une branche de parallélogramme (4, 104) pouvant dévier verticalement et avec une branche de parallélogramme (3, 103) fixe, **caractérisé en ce qu'**aussi bien une zone de logement (32, 33, 69) pour un premier support (19, 119) pour le rattachement en un point d'un plateau (8, 8') qu'une zone de logement (38, 39, 71, 72) pour un second support (40, 42, 46, 47, 140, 142) pour le rattachement en plusieurs points, en particulier pour le rattachement en quatre points, d'un plateau (8", 8"') est relié au dispositif de transmission de force (2, 102), le module de cellule de pesée (1, 101) pouvant être utilisé pour la fabrication de différents types de balances d'une famille de balances.

2. Module de cellule de pesée selon la revendication 1, **caractérisé en ce que** aussi bien la zone de logement (32, 33) pour le premier support (19) pour le rattachement en un point d'un plateau (8, 8') que la zone de logement (38, 39) pour le second support (40, 42, 46, 47) pour le rattachement en plusieurs points, en particulier pour le rattachement en quatre points, d'un plateau (8'', 8''') est reliée au moyen d'une pièce intermédiaire au dispositif de transmission de force (2).

3. Module de cellule de pesée selon la revendication 2, **caractérisé en ce qu'**un dispositif de protection de surcharge est présent et **en ce que** la pièce intermédiaire fait partie de ce dispositif de protection de surcharge.

4. Module de cellule de pesée selon la revendication 3, **caractérisé en ce que** le dispositif de protection de surcharge présente un guidage parallèle auxiliaire (20) avec un guide supérieur et un guide inférieur (21), les guides (21) étant reliés sur respectivement une extrémité par la branche de parallélogramme (4) pouvant dévier verticalement du dispositif de transmission de force (2) et sur leur extrémité respectivement opposée par au moins un élément de liaison (22, 29) à la façon d'un parallélogramme, et **en ce que** aussi bien la zone de logement (32, 33) pour le premier support (19) que la zone de logement (38, 39) pour le second support (40, 42, 46, 47) sont disposées sur un élément de liaison (29) du guidage parallèle auxiliaire (20).

5. Module de cellule de pesée selon la revendication 3 ou 4, **caractérisé en ce que** le dispositif de protection de surcharge (20) présente un ressort (23) pré-tendu et adapté à la charge maximale spécifiée du dispositif de transmission de force (2), lequel maintient dans la zone de charge spécifiée le au moins un élément de liaison (22, 29) du guidage parallèle auxiliaire (20) avec la branche du parallélogramme 4 pouvant dévier verticalement dans une liaison rigide.

6. Module de cellule de pesée selon l'une quelconque des revendications 3, 4 ou 5, **caractérisé en ce que** le dispositif de protection de surcharge (20) présente des premiers moyens de butée (50) et des seconds moyens de butée (60) séparés dans l'espace des premiers, les seconds moyens de butée (60) étant conçus de telle sorte qu'ils deviennent efficaces en rapport avec un module de cellule de pesée (1) qui est utilisé pour un rattachement en plusieurs points, en particulier un rattachement en quatre points du plateau (8'', 8'''), en supplément des premiers moyens de butée (50).

7. Module de cellule de pesée selon l'une quelconque des revendications 1 à 6, **caractérisé en ce qu'**un corps de base (10) est présent, avec lequel une liaison fixe peut être établie entre la branche du parallélogramme (3) fixe du dispositif de transmission de force (2) et un boîtier.

8. Module de cellule de pesée selon la revendication 7, **caractérisé en ce que** le corps (10) est conçu pour la réception de dispositifs de transmission de force (2) de différentes grandeurs, qui sont spécifiées pour différentes charges maximales.

9. Module de cellule de pesée selon la revendication 7 ou 8, **caractérisé en ce que** les moyens de butée (50, 60) du dispositif de protection de surcharge (20) présentent au moins une butée (14, 15, 17) placée sur le corps de base (10).

10. Module de cellule de pesée selon l'une quelconque des revendications 1 à 9, **caractérisé en ce que** la zone de logement (38, 39, 71, 72) pour le second support (40, 42, 46, 47, 140, 142) présente une zone de surface (39, 71) nervurée, disposée respectivement des deux côtés sur le dispositif de transmission de force (102) et éventuellement sur la pièce intermédiaire (20), et **en ce que** le second support (40, 42, 46, 47, 140, 142) présente deux renforts (40, 140) avec respectivement une zone de surface (48, 73) nervurée, une liaison par conjugaison de forme pouvant être établie par l'emboîtement des zones de surface (39, 48, 71, 73) nervurées respectives d'un renfort (40) d'une part et d'une zone de logement (38, 39, 71, 72) d'autre part entre ces éléments.

11. Module de cellule de pesée selon l'une quelconque des revendications 1 à 9, **caractérisé en ce que** la zone de logement (38, 39, 71, 72) pour le second support (40, 42, 46, 47, 140, 142) présente une zone de surface (39, 71) nervurée, disposée respectivement des deux côtés sur le dispositif de transmission de force (102) et éventuellement sur la pièce intermédiaire (20), et **en ce que** le second support (40, 42, 46, 47, 140, 142) présente un cadre (46), une liaison par conjugaison de forme pouvant être établie par l'emboîtement des zones de surface (39, 48, 71, 73) nervurées respectives du cadre (46) d'une part et de la zone de logement (38, 39, 71, 72) d'autre part entre ces éléments.

12. Module de cellule de pesée selon la revendication 11, **caractérisé en ce que** le cadre (46) se forme en complétant les renforts (40) au moyen de renforts transversaux (45).

13. Module de cellule de pesée selon l'une quelconque des revendications 10 à 12, **caractérisé en ce que**, pour les seconds moyens de butée (60), un boulon de butée (61) peut être placé sur un renfort (40) respectif ou sur le cadre (46), celui-ci étant disposé dans l'état monté de façon réglable entre une seconde butée (14) supérieure et une seconde butée (15) inférieure, lesquelles sont placées toutes deux sur le corps de base (10).

14. Module de cellule de pesée selon l'une quelconque des revendications 7 à 13, **caractérisé en ce qu'**un dispositif de calibrage, qui présente un logement de poids de calibrage (35), un dispositif pour le rattachement du poids de calibrage (30) et un poids de calibrage (36, 36'), est présent, le logement du poids de calibrage (35) étant relié au dispositif de transmission de force (2), et le dispositif pour le rattachement du poids de calibrage (30) étant placé sur le corps de base (10).

15. Module de cellule de pesée selon la revendication 14, **caractérisé en ce que** le dispositif de calibrage présente un poids de calibrage (36, 36') adaptable à la charge maximale, pour laquelle le dispositif de transmission de force (2) est spécifié.

16. Module de cellule de pesée selon l'une quelconque des revendications 1 à 15, **caractérisé en ce que** le guidage parallèle du dispositif de transmission de force (2, 102) est fabriqué d'une seule pièce dans un bloc de matériau.

17. Module de cellule de pesée selon l'une quelconque des revendications 1 à 16, **caractérisé en ce que** le dispositif de transmission de force (2, 102) est un dispositif travaillant selon le principe de la compensation de force électromagnétique, qui est fabriqué en particulier d'une seule pièce dans un bloc de matériau.
